# EUROPEAN PATENT APPLICATION

(11) **EP 4 471 304 A1**
(43) Date of publication of application: **04.12.2024**
(21) Application number: 23746062.1
(22) Date of filing: 16.01.2023
(51) Int. Cl.: F16K 1/04, F16K 1/36, F16K 1/32, F16K 27/02, F16K 41/06, F16K 24/06

(54) **STOP VALVE AND REFRIGERATION SYSTEM HAVING SAME**

(30) Priority: 27.01.2022 CN 202220233391 U
(71) Applicant: Zhejiang Dunan Artificial Environment Co., Ltd., Shaoxing Zhejiang 311835 (CN)
(72) Inventor: CHEN, Diyong, Shaoxing, Zhejiang 311835 (CN); LOU, Feng, Shaoxing, Zhejiang 311835 (CN); ZHOU, Feng, Shaoxing, Zhejiang 311835 (CN); FENG, Guanghua, Shaoxing, Zhejiang 311835 (CN)
(74) Representative: Petraz, Gilberto Luigi
(86) International application number: PCT/CN2023/072346
(87) International publication number: WO 2023/143180

(57) **Abstract**

A stop valve (100) and a refrigeration system (200) having the same are provided. The stop valve (100) includes: a valve body (10), which is provided with a valve port (161); and a valve core (20), which is at least partially provided inside the valve body (10) and capable of moving in the valve body (10) along an axis of the valve body (10) to seal or open the valve port (161). A side of the valve core (20) towards the valve port (161) is provided with a first groove (22), a first sealing member (221) is embedded in the first groove (22), the first sealing member (221) is in interference fit with the first groove (22), a restricting portion (222) is provided on the inner surface of the first groove (22), and the restricting portion (222) can restrict the first sealing member (221).

## Description

### CROSS-REFERENCE TO RELATED APPLICATION

This application claims priority to Chinese patent application No. 202220233391.1, filed on January 27, 2022, and titled "STOP VALVE AND REFRIGERATION SYSTEM HAVING SAME", the content of which is hereby incorporated by reference in its entirety.

### TECHNICAL FIELD

The present application relates the field of refrigeration technology, in particular, to a stop valve and a refrigeration system having the same.

### BACKGROUND

In refrigeration systems, a stop valve plays a significant role of cutting off and throttling the medium in the pipeline where the stop valve locates in. The opening and closing component of the stop valve is the valve core, and the valve core is mainly configured to cut off the medium in a low temperature environment.

In the stop valve of the related technology, the valve core can abut against the valve port to open or close the stop valve. However, the valve core and the valve port are generally closed by means of hard seal, i.e., the valve core directly abuts against the valve port. A sealing performance of this sealing program is poor, which is prone to cause leakage. One solution of the problem is to provide a sealing member between the valve core and the valve port to improve the sealing performance, but the sealing member is prone to problems such as offsetting and falling off from the valve core and the valve port.

### SUMMARY

A stop valve is provided according to embodiments of the present application. The stop valve includes: a valve body and a valve core, wherein the valve body is provided with a valve port; at least a part of the valve core is disposed in the valve body, and is capable of moving along an axis of the valve body to seal or open the valve port.

A side of the valve core towards the valve port is provided with a first groove. A first sealing member is inserted in the first groove. The first sealing member is in interference fit with the first groove. An inner surface of the first groove is provided with a restricting portion, and the restricting portion is capable of restricting the first sealing member.

In some embodiments, the valve body includes an end cap and a valve seat, the end cap is located at a top end of the valve body or disposed inside the valve body, and the end cap fits with the valve core to seal the valve body; and
the valve seat is disposed inside the valve body, the valve port is located on the valve seat, and defines the valve port, the first sealing member is capable of abutting against a circumference sidewall of the valve seat where the valve port is located to seal the valve port.

In some embodiments, a hardness of the first sealing member is smaller than a hardness of the valve core, the first groove is a ring-shaped groove, the first sealing member is a sealing ring, and the sealing ring is made of copper.

In some embodiments, a width of the first groove gradually decreases along a direction towards the valve port to define the restriction portion.

In some embodiments, an inner surface of a sidewall of the first groove adjacent to a periphery surface of the valve core gradually extends towards an axis of the valve core along the direction towards the valve port, so as to define an inclined plane, and the inclined plane is regarded as the restriction portion.

In some embodiments, an inner surface of the first groove adjacent to the axis of the valve core extends gradually away from the axis of the valve core along the direction towards the valve port, so as to define an inclined plane, and the inclined plane is regarded as the restriction portion.

In some embodiments, an angle between the restricting portion and the axis of the valve core is defined as *α*, and the angle *α* between the restricting portion and the axis of the valve core is in a range of 1° to 10°.

In some embodiments, an end of the valve core towards the valve port is provided with a guiding portion, the guiding portion is capable of guiding the valve core into the valve port, and the first sealing member is sleeved outside the guiding portion; and the guiding portion is provided with a guiding section, and the guiding section is an arc-shaped chamfer.

In some embodiments, the valve core is provided with an operation portion and a connecting portion, the operation portion is connected to an end of the connecting portion away from the valve seat, a size of the connecting portion is greater than a size of the operation portion, a step is defined between the connecting portion and the operation portion, the step is provided with a second sealing member, and the second sealing member abuts against a side of the end cap adjacent to the valve core.

In some embodiments, the connecting portion is provided with a third sealing member, the third sealing member is circumferentially surrounded on an outer surface of the connecting portion, and a surface of a peripheral side of the third sealing member is in contact with an inner surface of the valve body to seal the valve body.

A refrigeration system is also provided by the present application, and the refrigeration system includes the stop valve described above.

Details of one or more embodiments of the present application are set forth in the accompanying drawings and description below. Other features, objects, and advantages of the present application will become apparent from the specification, the accompanying drawings, and the claims.

### BRIEF DESCRIPTION OF THE DRAWINGS

In order to better describe and illustrate those embodiments and/or examples of the invention disclosed herein, reference may be made to one or more of the accompanying drawings. The additional details or examples used to describe the accompanying drawings should not be considered a limitation on the scope of any of the disclosed inventions, the embodiments and/or examples presently described, and the best mode of these inventions as presently understood.
FIG. 1 is a sectional view of a stop valve in one or some embodiments.
FIG. 2 is a schematic diagram of a valve core in one or some embodiments, in which the valve core is not provided with a sealing member.
FIG. 3 is a schematic diagram of a valve core in one or some embodiments, in which the valve core is provided with sealing members.
FIG. 4 is a stereo diagram of a stop valve in one or some embodiments.
FIG. 5 is a schematic diagram of a refrigeration system in one or some embodiments.

In the figures, 100 represents a stop valve; 10 represents a valve body; 11 represents a first opening; 12 represents a first communication tube; 13 represents a second opening; 14 represents a second communication tube; 15 represents an end cap; 151 represents a second threaded section; 16 represents a valve seat; 161 represents a valve port; 20 represents a valve core;21 represents an operation portion; 211 represents a first threaded section; 22 represents a first groove; 221 represents a first sealing member; 22A represents an inclined surface; 222 represents a restricting portion; 23 represents a guiding portion; 231 represents a guiding section; 24 represents a second sealing member; 25 represents a third sealing member; 26 represents a connecting portion; 30 represents an air valve assembly; 31 represents a shell; 32 represents a fourth sealing member; 33 represents a connecting body; 34 represents an elastic member; 35 represents an air valve core; 200 represents a refrigeration system.

### DETAILED DESCRIPTION

The technical solutions in the embodiments of the present application will be described clearly and completely in the following in conjunction with the accompanying drawings in the embodiments of the present application, and it is obvious that the described embodiments are only a part of the embodiments of the present application but not all of the embodiments. Based on the embodiments in the present application, all other embodiments obtained by a person of ordinary skill in the art without making creative labor fall within the scope of protection of the present application.

It is noted that when a component is said to be "disposed on" another component, it may be directly on the other component or there may be a centered component. When a component is said to be "set on" another component, it may be set directly on the other component or there may be both centered components. When a component is considered to be "fixed to" another component, it may be fixed directly to the other component or there may be both centered components.

Unless otherwise defined, all technical and scientific terms used herein have the same meaning as commonly understood by those skilled in the art of the present application. Terms used herein in the specification of the present application are used only for the purpose of describing specific embodiments and are not intended to limit the present application. The term "or/and" as used herein includes any and all combinations of one or more related listed items.

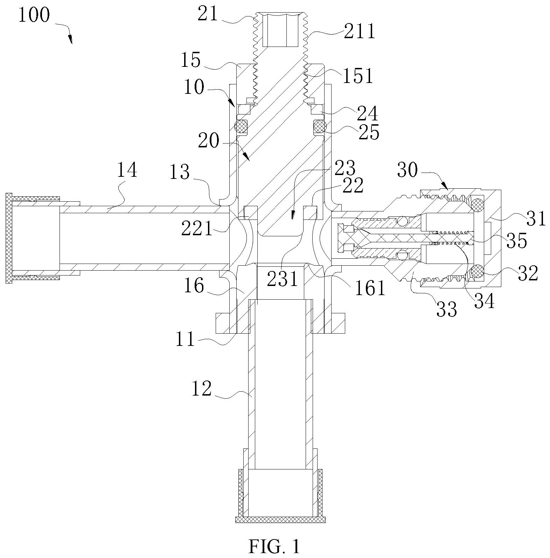

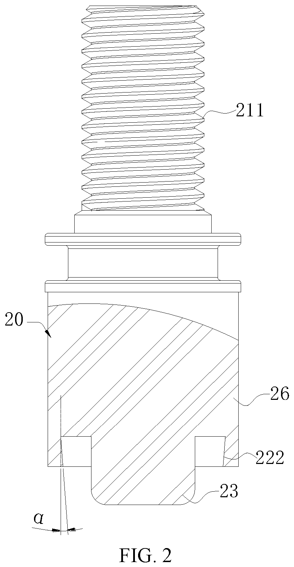

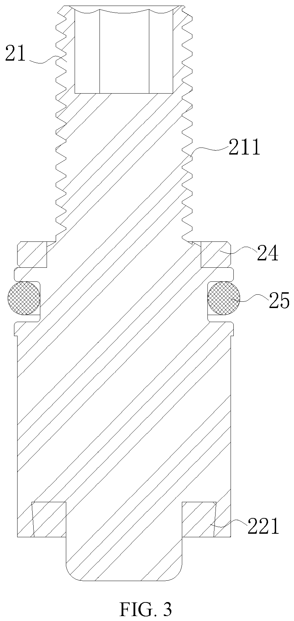

Referring to FIG. 1 to FIG. 5, the stop valve 100 is disposed in a refrigeration system 200, and configured for communicating and cut off the pipeline.

The stop valve 100 includes a valve body 10 and a valve core 20, and the valve body 10 is connected to the valve core 20. The valve body 10 has a hollow structure, and is configured for accommodating components such as the valve core 20; and at least a part of the valve core 20 is disposed in the valve body 10, and is capable of moving along an axis of the valve body 10.

The valve body 10 is further provided with a first opening 11 and a second opening 13. A side of the first opening 11 away from the valve body 10 is provided with a first communication tube 12, and the first opening 11 is connected to and in communication with the outside world via the first communication tube 12. A side of the second opening 13 away from the valve body 10 is connected to and in communication with the second communication tube 14, and the second opening 13 is in communication with the outside world via the second communication tube 14. The first communication tube 12 and the second communication tube 14 are configured as an inlet of the medium or an outlet of the medium, respectively. When the first communication tube 12 is defined as the inlet of the medium, the medium flows into the stop valve 100 from the first communication tube 12, and then flows into the valve body 10 via the first opening 11. If the stop valve 100 is in an opened state, the medium flows out of the stop valve 100 sequentially from the second opening 13 and the second communication tube 14. Vice versa, the medium can flow into the valve body 10 sequentially from the second communication tube 14 and the second opening 13, and flows out of the stop valve 100 sequentially from the first opening 11 and the first communication tube 12.

The valve body10 further includes an end cap 15 and a valve seat 16. The end cap 15 is located at a top end of the valve body 10, and the end cap 15 fits with the valve core 20 to seal the valve body 10, so as to prevent impurities such as dust, powder and the like from entering the valve body 10 from the outside world and affecting a sealing performance of opening and closing the stop valve 100 and purity of the medium in the valve body 10, and avoiding influence on other performances of the stop valve 100.

Optionally, the end cap 15 can be disposed inside the valve body 10, that is, a periphery surface of the end cap 15 abuts against an inner surface of the valve body, and an inner side surface of the end cap 15 abuts against the periphery surface of the valve core 20. In this way, by fitting the end cap 15 with the valve core 20, the valve body 10 can be sealed. A position in which the end cap 15 located is not limited to the exampled in the present embodiment, as long as the end cap 15 can achieve the aim described above.

The valve seat 16 is disposed in the valve body 10 and configured for abutting against the valve core 20, so as to communicate or seal off a communication in the valve body 10. In the present embodiment, the valve seat 16 is disposed at the first opening 11. In some embodiments, the valve seat 16 can be disposed between the first opening and the second opening 13.

Specifically, in the present embodiment, the valve seat 16 is provided with a valve port 161. The valve port 161 is in communication with the first opening 11 to define a channel for the medium to flow in or out together. Movement of the valve core 20 along the axis of the valve body 10 can seal or open the valve port 161, so as to cut off the medium. Optionally, in the present embodiment, the valve seat 16 and the valve body 10 are separately provided, so as to reduce difficulty of the processing. Optionally, in some embodiments, the valve seat 16 and the valve body 10 can be directly manufactured, and the valve port 161 can be directly provided on the valve body 10.

Referring to FIG. 1 to FIG. 3, a side of the valve core 20 towards the valve port 161 is provided with a first groove 22. A first sealing member 221 is inserted in the first groove 22. The first sealing member 221 is in interference fit with the first groove 22. The first sealing member 221 can improve the sealing performance between the valve core20 and the valve seat 16. In addition, due to an extrusion force caused by deformation of the first sealing member 221, the first sealing member 221 and the first groove 22 are supported by each other by a mutual support force, so as to fix and restrict the first sealing member 221. Thus, influence on the sealing performance of the stop valve 100 caused by the first sealing member 221 falling off from the first groove 22 can be avoided.

Specifically, a hardness of the first sealing member 221 is different from a hardness of the valve core 20. Due to difference between the materials and hardnesses of the first sealing member 221 and the valve core 20, one of the two having a smaller hardness will cause greater deformation to increase a restriction strength between the first sealing member 221 and the valve core 20, so as to prevent breakage in the process of an interference fit caused by the same material and hardness of the two.

Furthermore, a hardness of the first sealing member 221 is smaller than a hardness of the valve core 20, so that it is easier to insert the first sealing member 221 into the first groove 22, and the first sealing member 221 abuts more tightly against the valve seat 16.

In the present embodiment, an inner surface of the first groove 22 is provided with a restricting portion 222, and the restricting portion 222 is capable of restricting the first sealing member 221. The restricting portion 222 can further restrict the first sealing member 221 in the first groove 22 to prevent the first sealing member 221 from falling off.

Specifically, a width of the first groove 22 gradually decreases along a direction towards the valve port 161 to define the restriction portion 222. A size of a opening of the first groove 22 is smaller than a size of the groove body or a size of the bottom of the groove, so that it is harder for the first sealing member 221 to fall off from the first groove 22. The first sealing member 221 is restricted by the first groove 22 by means of the width of the first groove 22. The structure is simple and an extra component is not required.

Furthermore, an inner surface of a sidewall of the first groove 22 adjacent to a periphery surface of the valve core 20 gradually extends towards an axis of the valve core 20 along the direction towards the valve port 161, so as to define an inclined plane 22A, and the inclined plane 22A is regarded as the restriction portion 222. Of course, in some embodiments, an inner surface of the first groove 22 adjacent to the axis of the valve core 20 extends gradually away from the axis of the valve core 20 along the direction towards the valve port 161, so as to define an inclined plane 22A, and the inclined plane 22A is regarded as the restriction portion 222. The method for defining the restricting portion 222 is not limited to the methods described in the present embodiment.

An angle between the restricting portion 22A and the axis of the valve core 20 is defined as *α*, and the angle *α* between the restricting portion 22A and the axis of the valve core 20 is in a range of 1° to 10°, which not only ensures restriction firmness of the restricting portion 222 to the first sealing member 221 and prevents the first sealing member 221 from falling off from the first groove 22, but also avoids conditions that the first sealing member 221 is hard to be inserted into the first groove 22 or damage of the first sealing member 221 or the first groove 22 in the inserting process caused by an unduly small opening of the first groove 22.

It could be understood that the angle *α* between the restricting portion 22A and the axis of the valve core 20 can be 1°, 2°, 3°, 4°, 5°, 6°, 7°, 8°, 9°, or 10°, or can be 1.5°, 2.5°, and the like. A valve of the angle *α* between the restricting portion 22A and the axis of the valve core 20 is in the range of 1° to 10°, and not limited to integers.

In the present embodiment, the first groove is a ring-shaped groove, and the first sealing member 221 is a sealing ring, so as to improve a contact area between the first groove 22 and the first sealing member 221 as much as possible, so that the first groove 22 fits more tightly with the first sealing member 221. At the same time, a contact area between the sealing ring and the valve seat 16 is greater, and the sealing ring can achieve sealing in all directions corresponding to a shape of the valve port 161, so that the sealing performance of the valve core is further improved.

The sealing ring is made of copper, which has a certain ductility while ensuring the strength, so that the sealing ring can deform under pressure to improve the sealing performance of the stop valve 100.

The valve core 20 includes an operation portion 21, a guiding portion 23 and a connecting portion 26. The operation portion 21 is connected to the guiding portion 23 by the connecting portion 26. The operation portion 21 is located at a side of the connecting portion 26 away from the valve seat 16, and an end of the operation portion 21 extends out of the end cap 15. The guiding portion 23 is located at an end of the connecting portion 26 adjacent to the valve seat 16, and is capable of guiding the valve core 20 into the valve port 161.

The operation portion 21 extends out of an upper end surface of the end cap 15, and is convenient to be processed or disassembled. The operation portion 21 has a hollow structure having an opening at the top end, and a plurality of planes are uniformly disposed at intervals on the inner surface of the operation portion 21, so that the operation portion 21 can fit with tools such as hexane wrench, and the like. In some embodiments, the planes on the inner surface of the operation portion 21 can be nonuniformly disposed at intervals, so as to fit with irregular wrenches.

A periphery surface of the operation portion 21 is provided with a first threaded section 211, an inner surface of the end cap 15 is provided with a second threaded section 151. The second threaded section 151 fits with the first threaded section 211 to make the valve core 20 move along the axis of the valve body 10.

An periphery surface of the valve core abuts against an inner surface of the valve body 10, so as to allow the valve core 20 to move axially along an inner surface of the valve body10. A size of the connecting portion 26 is greater than a size of the operation portion 21, a step is defined between the connecting portion 26 and the operation portion 21, the step is provided with a second sealing member 24, and the second sealing member 24 abuts against a side of the end cap 15 adjacent to the valve core 20. When the valve core 20 moves to a limiting position towards the end cap 15, that is, when the second sealing member 24 abuts against the end cap 15, the second sealing member 24 can play a role of buffer and increase the sealing performance between the end cap 15 and the second sealing member 24.

An end of the valve core 20 adjacent to the operation portion 21 is further provided with a third sealing member 25, the third sealing member 25 is circumferentially surrounded on an outer surface of the valve core 20, and a surface of a peripheral side of the third sealing member 25 is in contact with an inner surface of the valve body 10 to seal the valve body 10, so that the medium will not leak while flowing in the first opening 11 and the second opening 13. In some embodiments, the third sealing member 25 can be replaced with components that can play a role of sealing, such as sealing gasket and the like.

The guiding portion 23 is located at an end of the valve core 20 adjacent to the first opening 11, and is configured for guiding the valve core 20 inserting into the valve port 161, so that the valve core 20 fits with the valve port 161 and seals the valve port 161.

The guiding portion 23 is provided with a guiding section 231. In the present embodiment, the guiding section is an arc-shaped chamfer, which facilitates insertion of the valve core 20 into the valve port 161, and prevents the valve core 20 from impacting and intervening the valve port 151, and cannot successfully open or close the stop valve.

In addition, the stop valve 100 further includes an air valve assembly 30. The air valve assembly 30 is connected to and in communication with the valve body 10. In the present embodiment, the air valve assembly 30 is opposite to the second opening 13 and defined as a gas inlet or a gas outlet, and configured for supplying the medium or discharging the medium for the whole refrigeration system 200. In some embodiments, an axis of the air valve assembly 30 is perpendicular to an axis of the second opening 13, and the air valve assembly 30 can be disposed at other positions of the valve body 10.

The air valve assembly 30 includes a connecting body 33. The connecting body 33 is connected to and in communication with the valve body 10, and is configured as a channel through which a medium flows into or out of the valve body 10.

The air valve assembly 30 further includes an air valve core 35, a shell 31 and a fourth sealing member 32. The air valve core 35 is disposed in the connecting body 33 and configured for making an inside of the valve body 10 and an inside of the connecting body 33 be in communication with each other and out of communication. The shell 31 is sleeved on a periphery surface of a sidewall of the connecting body 33, and configured for protecting the air valve core 35 and prevent external impurities from entering the air valve assembly 30. The fourth sealing member 32 is located between the shell 31 and the connecting body 33, and configured for fitting with the shell 31 to seal the connecting body 33.

Specifically, an end of the air valve core 35 is provided with an elastic member 34. When the air valve core 35 does not suffer from an external pressure, the air valve core 35 can be kept in a closed state, and the connecting body 33 is kept sealed and insulate the inside of the valve body 10 from the outside world at this time. When the air valve core 35 suffers from the external pressure, the air valve core 35 extrudes the elastic member 34 and moves towards the valve body 10, so as to release the sealing and make the inside of the valve body 10 be in communication with the inside of the connecting body 33, so that the medium can flow into the valve body 10 or flow out of the valve body 10. The elastic member 34 is configured for restoring the air valve core 35.

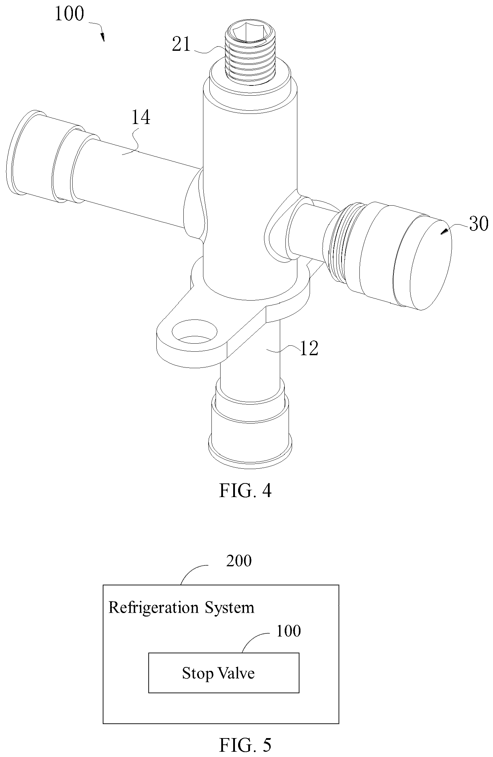

Referring to FIG. 5, the present application further provides a refrigeration system 200, which includes the stop valve 100 described above. The stop valve 100 is disposed in a medium pipeline of the refrigeration system 200, configured to cut off or communicate the medium in the pipeline, and configured to supply the medium to the refrigeration system 200.

When the stop valve 100 in the present embodiment is in operation, when the stop valve 100 should be closed, the operation portion 21 at the top end of the stop valve 100 is screwed, and the operation portion 21 and the valve core 20 synchronously rotate. Due to fit between the first threaded section 211 and the second threaded section 151, the valve core 20 is driven to move along the axis of the valve body 10 relative to the end cap 15, so as to make the guiding portion 23 at the bottom end of the valve core 20 insert into the valve port 161. Thus, the first sealing member 221 abuts against the valve seat 16 and seals the first communication tube 12, so that the first communication tube 12 is out of communication with the second communication tube 14.

Compared to the conventional art, the sealing performance between the valve core 20 and the valve seat 16 is improved with the first sealing member 221. In addition, due to an extrusion force caused by deformation of the first sealing member 221, the first sealing member 221 and the first groove 22 are supported by each other by a mutual support force, so as to fix and restrict the first sealing member 221. Thus, influence on the sealing performance of the stop valve 100 caused by the first sealing member 221 falling off from the first groove 22 can be avoided.

The technical features of the above to mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above to described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A stop valve, **characterized by** comprising
a valve body provided with a valve port;
a valve core, wherein at least a part of the valve core is disposed in the valve body, and is capable of moving along an axis of the valve body to seal or open the valve port;
a side of the valve core towards the valve port is provided with a first groove, a first sealing member is inserted in the first groove, the first sealing member is in interference fit with the first groove, an inner surface of the first groove is provided with a restricting portion, and the restricting portion is capable of restricting the first sealing member.

2. The stop valve of claim 1, wherein the valve body comprises an end cap and a valve seat, the end cap is located at a top end of the valve body or disposed inside the valve body, and the end cap fits with the valve core to seal the valve body; and
the valve seat is disposed inside the valve body, the valve port is located on the valve seat, the first sealing member is capable of abutting against a circumference sidewall of the valve seat where the valve port is located to seal the valve port.

3. The stop valve of claim 2, wherein a hardness of the first sealing member is smaller than a hardness of the valve core, the first groove is a ring-shaped groove, the first sealing member is a sealing ring, and the sealing ring is made of copper.

4. The stop valve of any one of claims 1 to 3, wherein a width of the first groove gradually decreases along a direction towards the valve port to define the restriction portion.

5. The stop valve of claim 4, wherein an inner surface of a sidewall of the first groove adjacent to a periphery surface of the valve core gradually extends towards an axis of the valve core along the direction towards the valve port, so as to define an inclined plane, and the inclined plane is regarded as the restriction portion.

6. The stop valve of claim 4, wherein an inner surface of the first groove adjacent to the axis of the valve core extends gradually away from the axis of the valve core along the direction towards the valve port, so as to define an inclined plane, and the inclined plane is regarded as the restriction portion.

7. The stop valve of claim 5, wherein an angle between the restricting portion and the axis of the valve core is defined as *α*, and the angle *α* between the restricting portion and the axis of the valve core is in a range of 1° to 10°.

8. The stop valve of any one of claims 1 to 3, wherein an end of the valve core towards the valve port is provided with a guiding portion, the guiding portion is capable of guiding the valve core into the valve port, and the first sealing member is sleeved outside the guiding portion; and
the guiding portion is provided with a guiding section, and the guiding section is an arc-shaped chamfer.

9. The stop valve of claim 2, wherein the valve core is provided with an operation portion and a connecting portion, the operation portion is connected to an end of the connecting portion away from the valve seat, a size of the connecting portion is greater than a size of the operation portion, a step is defined between the connecting portion and the operation portion, the step is provided with a second sealing member, and the second sealing member abuts against a side of the end cap adjacent to the valve core.

10. The stop valve of claim 9, wherein the connecting portion is provided with a third sealing member, the third sealing member is circumferentially surrounded on an outer surface of the connecting portion, and a surface of a peripheral side of the third sealing member is in contact with an inner surface of the valve body to seal the valve body.

11. A refrigeration system **characterized by** comprising the stop valve of any one of claims 1 to 10.
